# EUROPÄISCHE PATENTSCHRIFT

(11) **EP 2 780 185 B1**
(45) Veröffentlichungstag und Bekanntmachung des Hinweises auf die Patenterteilung: **15.05.2019**
(21) Anmeldenummer: 12797762.7
(22) Anmeldetag: 14.11.2012
(51) Int. Cl.: B60K 35/00, B60K 37/02

(54) **KOMBINATIONSANZEIGEINSTRUMENT IN EINEM FAHRZEUG**
COMBINATION DISPLAY INSTRUMENT IN A VEHICLE
INSTRUMENT D'AFFICHAGE COMBINÉ DANS UN VÉHICULE

(30) Priorität: 14.11.2011 DE 102011086269
(43) Veröffentlichungstag der Anmeldung: 24.09.2014
(73) Patentinhaber: Johnson Controls Automotive Electronics GmbH, 75196 Remchingen (DE)
(72) Erfinder: SÜSS, Manfred, 75195 Remchingen (DE); HOFFMANN, Isabel, 75045 Walzbachtal (DE); KAMMERER, Gerhard, 75203 Königsbach (DE); BEHRENDS, Heinrich, 76332 Bad Herrenalb (DE); MAYER, Martin, 74889 Sinsheim (DE); MEHL, Nicolas, F-67400 Illkirch-Graffenstaden (FR); LANGER, Peter, 76137 Karlsruhe (DE)
(74) Vertreter: Finger, Catrin
(86) Internationale Anmeldenummer: PCT/EP2012/072619
(87) Internationale Veröffentlichungsnummer: WO 2013/072366

(56) Entgegenhaltungen:
- EP-A1- 1 857 994
- EP-A1- 1 873 001
- WO-A1-2011/098171
- DE-A1- 2 925 083
- DE-A1-102010 043 200

## Beschreibung

Die Erfindung betrifft ein Kombinationsanzeigeinstrument in einem Fahrzeug gemäß den Ansprüchen 1 und 2.

Die WO 00/70400 A1 beschreibt eine mehrschichtige Flüssigkristallanzeige. Aus der WO 2011/098171 A1 und EP 1 857 994 A1 sind weitere Anzeigeelemente bekannt, welche aus aufeinanderliegenden Folien oder Folien-Substrat-Anordnungen gebildet sind.

Der Erfindung liegt die Aufgabe zugrunde, ein verbessertes Kombinationsanzeigeinstrument in einem Fahrzeug anzugeben. Hinsichtlich des Kombinationsanzeigeinstruments wird die Aufgabe erfindungsgemäß durch ein Kombinationsanzeigeinstrument in einem Fahrzeug mit den Merkmalen der unabhängigen Ansprüche gelöst.

Bevorzugte Ausgestaltungen und Weiterbildungen der Erfindung sind in den abhängigen Ansprüchen angegeben.

Beim Kombinationsanzeigeinstrument in einem Fahrzeug, bei welchem in oder auf eine gemeinsame Trägerplatte eine Mehrzahl von Anzeigeelementen und/oder -skalen ein- oder aufgebracht ist, wobei in Blickrichtung eines Betrachters vor der Trägerplatte eine korrespondierend zur Trägerplatte ausgebildete Polarisationsfolie angeordnet ist, wird die Polarisationsfolie erfindungsgemäß mittels entsprechender Ausformungen in oder an einem Gehäuse des Kombinationsanzeigeinstruments in einem zusammengebauten Zustand des selbigen form- und/oder kraftschlüssig an ihrer Position gehalten. Durch die Anordnung einer Polarisationsfolie vor der Trägerplatte ist die Transmission einer hinter der Trägerplatte erzeugten elektromagnetischen Strahlung, d. h. von sichtbarem Licht, erhöht, wobei die von einem Anzeigeelement und/oder -skale selbst hervorgerufene Reflexion in vorteilhafter Weise weitgehend ausgeschlossen ist. Darüber hinaus ist mittels der Polarisationsfolie vermieden oder zumindest vermindert, dass ein Betrachter des Anzeigeelementes und/oder-skale die Konturen desselben in einem deaktivierten, d.h. unbeleuchteten, Zustand des Kombinationsanzeigeinstruments wahrnimmt.

Weiterhin ist durch die haftmittellose Anordnung der Polarisationsfolie an der Trägerplatte ein Transmissionsgrad der Anordnung signifikant erhöht, so dass eine Leuchtstärke der Lichtquelle und ein daraus resultierender Verbrauch an elektrischer Energie zu deren Betrieb verringerbar sind.

In einer weiteren und nicht-erfindungsgemäßen Ausführungsform ist die Polarisationsfolie ohne zusätzliche Verbindungsmittel mit der Trägerplatte 1 direkt stoffschlüssig durch Haftung der Polarisationsfolie 7 selbst verbunden (auch kurz Bonden bezeichnet). Dabei wird beim Aufbringen der Polarisationsfolie Wärme zugeführt, so dass ein teilweises Aufschmelzen und Anhaften mindestens einer Schicht der Polarisationsfolie an der Trägerplatte und somit eine Verbindung miteinander bewirkt wird (auch kurz Thermokompressionsbonden bezeichnet).

In einer bevorzugten Ausführungsform ist die Polarisationsfolie eine Zirkular-Polarisationsfolie mittels der beispielweise verhindert ist, dass ein von außen auf Anzeigeelement und/oder-skale eintretendes Licht rückreflektiert wird. Die Polarisationsfolie selbst ist als ein laminiertes Element gebildet, wobei mehrere übereinander angeordnete Schichten miteinander stoffschlüssig verbunden sind, insbesondere aufeinander geklebt sind.

In einer vorteilhaften Ausführungsvariante bedeckt die Polarisationsfolie die Trägerplatte zumindest abschnittsweise, bevorzugt im Bereich von Anzeigeelementen und/oder -skalen.

In einer besonders vorteilhaften Ausführungsvariante weisen die Trägerplatte und die Polarisationsfolie weitgehend identische Abmessungen auf, so dass alle auf, an oder in der Trägerplatte angeordneten Anzeigeelemente und/oder -skalen von der Polarisationsfolie bedeckt sind. Dadurch ist die Reflexion, die beispielweise von einer Beleuchtung der Anzeigeelemente und/oder -skalen hervorgerufen werden kann, für die gesamte Fläche der Trägerplatte verhindert oder zumindest verringert.

Erfindungsgemäß liegt die Polarisationsfolie vollflächig plan auf der Trägerplatte auf, so dass eine Oberfläche der Trägerplatte vor Umwelteinflüssen, beispielsweise Staub, geschützt ist.

Die Anzeigeelemente und/oder -skalen sind erfindungsgemäß als transparente oder semitransparente Abschnitte in die im Übrigen lichtundurchlässige Trägerplatte eingebracht. Dadurch sind die Anzeigeelemente und/oderskalen auf einfache Weise mittels einer hinter der Trägerplatte angeordneten Lichtquelle beleuchtbar.

In einer alternativen Ausführungsvariante der Erfindung besteht die Trägerplatte aus einem transparenten oder semitransparenten Material, welches abschnittsweise unter Ausformung der Anzeigeelemente und/oder -skalen mit einer lichtundurchlässigen Materialschicht bedruckt oder beschichtet ist.

Die Anzeigeelemente und/oder -skalen sind in der Trägerplatte in einem aktivierten Zustand des Kombinationsanzeigeinstruments mittels mindestens einer Lichtquelle hinterleuchtet.

Die Polarisationsfolie ist bevorzugt derart angeordnet und ausgerichtet, dass in einem deaktivierten Zustand des Kombinationsanzeigeinstruments die Anzeigeelemente und/oder -skalen in der Trägerplatte für einen Betrachter unsichtbar sind. Sind die Anzeigeelemente und/oder -skalen des Kombinationsanzeigeinstruments nicht beleuchtet, sind sie bedingt durch die Polarisationsfolie nicht sichtbar, da die Polarisationsfolie verhindert, dass von den Anzeigeelementen und/oder -skalen reflektiertes Umgebungslicht für einen Betrachter sichtbar ist. Dabei erscheint das Kombinationsanzeigeinstrument solange in einem homogenen Schwarz, bis die Beleuchtung der Anzeigeelemente und/oder -skalen eingeschaltet wird und die Anzeigeelemente und/oder -skalen derart sichtbar werden. Dieser Effekt wird auch als Black-Panel-Effekt bezeichnet.

Ausführungsbeispiele der Erfindung werden im Folgenden anhand von Zeichnungen näher erläutert.

Dabei zeigen:
- Fig. 1: schematisch eine Ansicht einer Trägerplatte eines Kombinationsanzeigeinstruments für ein Fahrzeug,
- Fig. 2: schematisch eine Seitenansicht einer Trägerplatte mit einer daran angeordneten Polarisationsfolie und
- Fig. 3: schematisch eine Explosionsdarstellung von Trägerplatte und Polarisationsfolie.

Einander entsprechende Teile sind in allen Figuren mit den gleichen Bezugszeichen versehen.

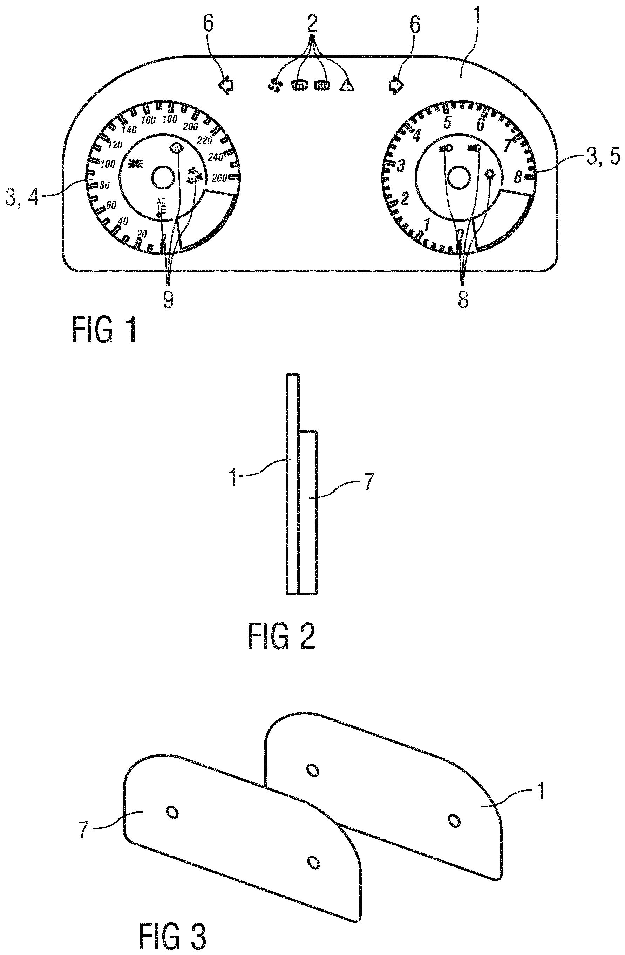

Figur 1 zeigt schematisch eine Ansicht einer Trägerplatte 1 eines nicht näher dargestellten Kombinationsanzeigeinstruments für ein Fahrzeug.

Um ein Kombinationsanzeigeinstrument zu bilden, sind eine Mehrzahl von einzelnen Anzeigeelementen 2 und/oder -skalen 3 direkt in eine Trägerplatte 1 eingebracht oder auf der Trägerplatte 1 angeordnet. Weiterhin kann in der Trägerplatte 1 zumindest eine nicht dargestellte Aussparung angeordnet sein, welche korrespondierend zu einem Bildschirm ausgebildet ist, welcher derart Teil des Kombinationsanzeigeinstruments sein kann und im Bereich der Aussparung angeordnet wird. Ein solcher Bildschirm ist bevorzugt als herkömmlicher Flüssigkristallbildschirm oder als eine herkömmliche Flüssigkristallanzeige ausgebildet.

Auf den Anzeigeelementen 2 und/oder -skalen 3 sowie dem Bildschirm sind in herkömmlicher Weise für den Fahrzeugbetrieb und/oder den Betrieb eines Fahrzeugassistenzsystems und/oder eines Unterhaltungssystems relevante Parameter, Steuer- und/oder Regelgrößen sowie Warnhinweise darstellbar.

Dabei sind die geometrische Form, die Anzahl und die Anordnung der Anzeigeelemente 2 und/oder -skalen 3 variabel in der Trägerplatte 1 anordenbar und somit einfach an die Erfordernisse in unterschiedlichen Anzeigekombinationsinstrumenten anpassbar.

Die Anzeigeskalen 3 sind bevorzugt teilkreisförmig ausgebildet und randseitig der Trägerplatte 1 und somit des Kombinationsanzeigeinstruments angeordnet. Dabei sind die Anzeigeskalen 3 in der dargestellten Ausführungsvariante als analoges Anzeigeelement eines herkömmlichen Geschwindigkeitsmessers 4 und als analoges Anzeigeelement eines herkömmlichen Drehzahlmessers 5 ausgebildet. Den Anzeigeskalen 3 ist jeweils ein nicht dargestelltes Zeigerelement zugeordnet, welches in Abhängigkeit eines darzustellenden oder anzuzeigenden Wertes entlang der jeweiligen Anzeigeskala 3 bewegt wird, so dass anhand der Schwenkbewegung des Zeigerelements entlang der Anzeigeskala 3 um eine Zeigerachse und einer daraus resultierenden Winkelstellung des Zeigerelements ein gegenwärtiger Wert einer Messgröße, also beispielsweise die Geschwindigkeit des Fahrzeugs, auf der Anzeigeskala 3 des Kombinationsanzeigeinstruments ablesbar ist.

In alternativen, nicht dargestellten Ausführungsvariante des Kombinationsanzeigeinstruments kann eine einzelne Anzeigeskala 3 auf, an oder in der Trägerplatte 1 angeordnet oder eingebracht sein, wobei diese Anzeigeskala 3 bevorzugt halbkreisförmig ausgebildet ist.

Die Anzeigeelemente 2 sind beispielsweise als herkömmliche Kontrollleuchten 6 für einen Richtungsanzeiger ausgebildet, welche bei einer Betätigung des Richtungsanzeigers aufblinken.

Weiterhin können die Anzeigeelemente 2 als herkömmliche grafische Symbole 8 oder Warnzeichen 9 ausgebildet sein, welche bei entsprechenden Situationen beleuchtet werden und den Fahrzeugnutzer warnen und/oder informieren.

In Figur 2 ist schematisch eine Seitenansicht der Trägerplatte 1 mit einer daran angeordneten Polarisationsfolie 7 dargestellt. Eine solche Polarisationsfolie 7 ist bevorzugt als eine Zirkular-Polarisationsfolie ausgebildet, mittels der beispielweise verhindert ist, dass ein von außen auf Anzeigeelemente 2 und/oder-skale 3 eintretendes Umgebungslicht rückreflektiert wird. Die Polarisationsfolie 7 selbst ist in einer möglichen Ausführungsform als ein laminiertes Element ausgebildet. Hierzu sind mehrere übereinander angeordnete Schichten miteinander stoffschlüssig verbunden, insbesondere aufeinander geklebt.

Dabei ist die Polarisationsfolie 7 in Blickrichtung B eines Betrachters vor der Trägerplatte 1 angeordnet und korrespondierend zur Trägerplatte 1 ausgeformt.

Die Polarisationsfolie 7 ist ohne Haftmittel, beispielweise mittels entsprechender Ausformungen in oder an einem Gehäuse des Kombinationsanzeigeinstrument, in einem zusammengebauten Zustand des selbigen form- und/oder kraftschlüssig an ihrer Position gehalten. Durch diese haftmittellose Anordnung der Polarisationsfolie 7 an der Trägerplatte 1 wird ein Transmissionsgrad der Anordnung signifikant erhöht, so dass eine Leuchtstärke der Lichtquelle und ein daraus resultierender Verbrauch an elektrischer Energie zu deren Betrieb verringerbar sind.

In einer ersten Ausführungsvariante bedeckt die Polarisationsfolie 7 die Trägerplatte 1 zumindest abschnittsweise, bevorzugt im Bereich von Anzeigeelementen 2 und/oder -skalen 3.

In einer besonders vorteilhaften Ausführungsvariante weisen die Trägerplatte 1 und die Polarisationsfolie 7 weitgehend identische Abmessungen auf, so dass alle auf, an oder in der Trägerplatte 1 angeordneten Anzeigeelemente 2 und/oder -skalen 3 von der Polarisationsfolie 7 bedeckt sind. Dadurch ist die Reflexion, die beispielweise von einer Beleuchtung der Anzeigeelemente 2 und/oder - skalen 3 hervorgerufen werden kann, für die gesamte Fläche der Trägerplatte 1 verhindert oder zumindest verringert.

Erfindungsgemäß liegt die Polarisationsfolie 7 vollflächig plan auf der Trägerplatte 1 auf, so dass eine Oberfläche der Trägerplatte 1 vor Umwelteinflüssen, beispielsweise Staub, geschützt ist.

Die Trägerplatte 1 ist aus einem herkömmlichen Kunststoff oder einem Kunststoffgemisch gefertigt.

Dabei sind die Anzeigeelemente 2 und/oder -skalen 3 in einer ersten erfinderischen Ausführungsvariante als transparente oder semitransparente Abschnitte in die im Übrigen lichtundurchlässige Trägerplatte 1 eingebracht. Dadurch sind die Anzeigeelemente 2 und/oder -skalen 3 auf einfache Weise mittels einer hinter der Trägerplatte 1 angeordneten, nicht dargestellten Lichtquelle beleuchtbar.

In einer alternativen erfinderischen Ausführungsvariante besteht die Trägerplatte 1 aus einem transparenten oder semitransparenten Material, welches beispielsweise zur Erzeugung einer farbigen Beleuchtung eingefärbt sein kann. Die Trägerplatte 1 ist abschnittsweise auf herkömmliche Art und Weise mit einer lichtundurchlässigen Materialschicht bedruckt oder beschichtet, wobei derart mittels der unbeschichteten Abschnitte die Anzeigeelemente 2 und/oder -skalen 3 ausgeformt sind.

Die Anzeigeelemente 2 und/oder -skalen 3 sind in der Trägerplatte 1 in einem aktivierten Zustand des Kombinationsanzeigeinstruments in herkömmlicher Art und Weise mittels mindestens einer Lichtquelle hinterleuchtet.

Die Polarisationsfolie 7 ist bevorzugt derart angeordnet und ausgerichtet, dass in einem deaktivierten Zustand des Kombinationsanzeigeinstruments die Anzeigeelemente 2 und/oder -skalen 3 in der Trägerplatte 1 für einen Betrachter unsichtbar sind. Sind die Anzeigeelemente 2 und/oder -skalen 3 des Kombinationsanzeigeinstruments nicht beleuchtet, sind sie bedingt durch die Polarisationsfolie 7 und deren Ausrichtung nicht sichtbar, da die Polarisationsfolie 7 verhindert, dass von den Anzeigeelementen 2 und/oder -skalen 3 reflektiertes Umgebungslicht für einen Betrachter sichtbar ist. Dabei erscheint das Kombinationsanzeigeinstrument solange in einem homogenen Schwarz, bis die Beleuchtung der Anzeigeelemente 2 und/oder -skalen 3 eingeschaltet wird und die Anzeigeelemente 2 und/oder - skalen 3 auf Grund der Hinterleuchtung sichtbar werden. Dieser Effekt wird auch als Black-Panel-Effekt bezeichnet.

Figur 3 zeigt schematisch eine Explosionsdarstellung von Trägerplatte 1 und Polarisationsfolie 7.

Die unbeleuchteten Anzeigeelemente 2 und/oder -skalen 3 sind hinter der Polarisationsfolie 7 nicht sichtbar, da die Polarisationsfolie 7 verhindert, dass von den Anzeigeelementen 2 und/oder -skalen 3 reflektiertes Umgebungslicht von einem Betrachter wahrnehmbar ist.

### Bezugszeichenliste

- 1: Trägerplatte
- 2: Anzeigeelement
- 3: Anzeigeskale
- 4: Geschwindigkeitsmesser
- 5: Drehzahlmesser
- 6: Kontrollleuchte
- 7: Polarisationsfolie
- 8: grafische Symbole
- 9: Warnzeichen

- B: Blickrichtung

## Patentansprüche

1. Kombinationsanzeigeinstrument in einem Fahrzeug, bei welchem in oder auf eine gemeinsame Trägerplatte (1) eine Mehrzahl von Anzeigeelementen (2) und/oder -skalen (3) ein- oder aufgebracht ist, wobei in Blickrichtung (B) eines Betrachters vor der Trägerplatte (1) eine korrespondierend zur Trägerplatte (1) ausgebildete Polarisationsfolie (7) angeordnet ist,
wobei die Anzeigeelemente (2) und/oder -skalen (3) als transparente oder semitransparente Abschnitte in die im Übrigen lichtundurchlässige Trägerplatte (1) eingebracht sind,
wobei die Polarisationsfolie (7) vollständig plan auf der Trägerplatte (1) aufliegt und haftmittellos mittels entsprechender Ausformungen in oder an einem Gehäuse des Kombinationsanzeigeinstruments in einem zusammengebauten Zustand des selbigen form- und/oder kraftschlüssig an ihrer Position an der Trägerplatte (1) gehalten ist.

2. Kombinationsanzeigeinstrument in einem Fahrzeug, bei welchem in oder auf eine gemeinsame Trägerplatte (1) eine Mehrzahl von Anzeigeelementen (2) und/oder -skalen (3) ein- oder aufgebracht ist, wobei in Blickrichtung (B) eines Betrachters vor der Trägerplatte (1) eine korrespondierend zur Trägerplatte (1) ausgebildete Polarisationsfolie (7) angeordnet ist,
wobei die Trägerplatte (1) aus einem transparenten oder semitransparenten Material besteht, welches abschnittsweise unter Ausformung der Anzeigeelemente (2) und/oder -skalen (3) mit einer lichtundurchlässigen Materialschicht bedruckt oder beschichtet ist, wobei die Polarisationsfolie (7) vollständig plan auf der Trägerplatte (1) aufliegt und haftmittellos mittels entsprechender Ausformungen in oder an einem Gehäuse des Kombinationsanzeigeinstruments in einem zusammengebauten Zustand des selbigen form- und/oder kraftschlüssig an ihrer Position an der Trägerplatte (1) gehalten ist.

3. Kombinationsanzeigeinstrument nach Anspruch 1 oder 2,
**dadurch gekennzeichnet, dass** die Polarisationsfolie (7) eine Zirkular-Polarisationsfolie ist.

4. Kombinationsanzeigeinstrument nach einem der vorhergehenden Ansprüche,
**dadurch gekennzeichnet, dass** die Polarisationsfolie (7) die Trägerplatte (1) zumindest abschnittsweise bedeckt.

5. Kombinationsanzeigeinstrument nach einem der vorhergehenden Ansprüche,
**dadurch gekennzeichnet, dass** die Trägerplatte (1) und die Polarisationsfolie (7) weitgehend identische Abmessungen aufweisen.

6. Kombinationsanzeigeinstrument nach einem der vorhergehenden Ansprüche,
**dadurch gekennzeichnet, dass** die Anzeigeelemente (2) und/oderskalen (3) in der Trägerplatte (1) in einem aktivierten Zustand des Kombinationsanzeigeinstruments mittels mindestens einer Lichtquelle hinterleuchtet sind.

7. Kombinationsanzeigeinstrument nach einem der vorhergehenden Ansprüche,
**dadurch gekennzeichnet, dass** die Polarisationsfolie (7) derart angeordnet und ausgerichtet ist, dass in einem deaktivierten Zustand des Kombinationsanzeigeinstruments die Anzeigeelemente (2) und/oder -skalen (3) in der Trägerplatte (1) für einen Betrachter unsichtbar sind.

## Claims

1. A combination display instrument in a vehicle, in which a plurality of display elements (2) and/or display scales (3) are inserted or applied in or on a common supporting plate (1), wherein a polarizing film (7) shaped to correspond to the supporting plate (1) is disposed in front of the supporting plate (1) in the viewing direction (B) of an observer,
wherein the display elements (2) and/or display scales (3) are inserted as transparent or semi-transparent segments in the otherwise opaque supporting plate (1),
wherein the polarizing film (7) lies flat on the supporting plate (1) over its entire area and is held adhesive-free in its position on the supporting plate (1) by material bonding and/or by force fit by means of suitable moldings in or on a housing of the combination display instrument in an assembled state of the same.

2. A combination display instrument in a vehicle, in which a plurality of display elements (2) and/or display scales (3) are inserted or applied in or on a common supporting plate (1), wherein a polarizing film (7) shaped to correspond to the supporting plate (1) is disposed in front of the supporting plate (1) in the viewing direction (B) of an observer,
wherein the supporting plate (1) consists of a transparent or semi-transparent material, which is printed or coated with an opaque material layer in segments when forming the display elements (2) and/or display scales (3), wherein the polarizing film (7) lies flat on the supporting plate (1) over its entire area and is held adhesive-free in its position on the supporting plate (1) by material bonding and/or by force fit by means of suitable moldings in or on a housing of the combination display instrument in an assembled state of the same.

3. The combination display instrument as claimed in claim 1 or 2,
**characterized in that** the polarizing film (7) is a circular polarizing film.

4. The combination display instrument as claimed in any one of the preceding claims, **characterized in that** the polarizing film (7) covers the supporting plate (1) at least in segments.

5. The combination display instrument as claimed in any one of the preceding claims,
**characterized in that** the supporting plate (1) and the polarizing film (7) comprise essentially identical dimensions.

6. The combination display instrument as claimed in any one of the preceding claims,
**characterized in that** the display elements (2) and/or display scales (3) in the supporting plate (1) are back lit in an activated state of the combination display instrument by means of at least one light source.

7. The combination display instrument as claimed in any one of the preceding claims,
**characterized in that** the polarizing film (7) is disposed and oriented such that in a deactivated state of the combination display instrument the display elements (2) and/or display scales (3) in the supporting plate (1) are not visible to an observer.

## Revendications

1. Instrument d'affichage combiné dans un véhicule, dans lequel une pluralité d'éléments (2) et/ou échelles (3) d'affichage est montée dans ou sur une plaque de support commune (1),
dans lequel un film de polarisation (7) réalisé de manière correspondante à la plaque de support (1) est agencé devant la plaque de support (1) dans la direction du regard (B) d'un observateur,
dans lequel les éléments (2) et/ou échelles (3) d'affichage sont montés en tant que sections transparentes ou semi-transparentes dans la plaque de support (1) du reste opaque,
dans lequel le film de polarisation (7) repose de manière entièrement plane sur la plaque de support (1) et est maintenu dans sa position au niveau de la plaque de support (1) par correspondance de forme et/ou par force sans adhésif au moyen de formes correspondantes dans ou au niveau d'un boîtier de l'instrument d'affichage combiné dans son état assemblé.

2. Instrument d'affichage combiné dans un véhicule, dans lequel une pluralité d'éléments (2) et/ou échelles (3) d'affichage est montée dans ou sur une plaque de support commune (1),
dans lequel un film de polarisation (7) réalisé de manière correspondante à la plaque de support (1) est agencé devant la plaque de support (1) dans la direction du regard (B) d'un observateur,
dans lequel la plaque de support (1) se compose d'un matériau transparent ou semi-transparent, lequel est imprimé ou revêtu par section par déformation des éléments (2) et/ou échelles (3) d'affichage d'une couche de matériau opaque,
dans lequel le film de polarisation (7) repose de manière entièrement plane sur la plaque de support (1) et est maintenu dans sa position au niveau de la plaque de support (1) par correspondance de forme et/ou par force sans adhésif au moyen de formes correspondantes dans ou au niveau d'un boîtier de l'instrument d'affichage combiné dans son état assemblé.

3. Instrument d'affichage combiné selon la revendication 1 ou 2,
**caractérisé en ce que** le film de polarisation (7) est un film de polarisation circulaire.

4. Instrument d'affichage combiné selon l'une quelconque des revendications précédentes,
**caractérisé en ce que** le film de polarisation (7) recouvre au moins par section la plaque de support (1).

5. Instrument d'affichage combiné selon l'une quelconque des revendications précédentes,
**caractérisé en ce que** la plaque de support (1) et le film de polarisation (7) présentent des dimensions largement identiques.

6. Instrument d'affichage combiné selon l'une quelconque des revendications précédentes,
**caractérisé en ce que** les éléments (2) et/ou échelles (3) d'affichage dans la plaque de support (1) sont rétroéclairés à l'état activé de l'instrument d'affichage combiné au moyen d'au moins une source de lumière.

7. Instrument d'affichage combiné selon l'une quelconque des revendications précédentes,
**caractérisé en ce que** le film de polarisation (7) est agencé et orienté de sorte qu'à l'état désactivé de l'instrument d'affichage combiné, les éléments (2) et/ou échelles (3) d'affichage dans la plaque de support (1) sont invisibles pour un observateur.
